# FASCICULE DE BREVET EUROPEEN

(11) **EP 2 919 581 B1**
(45) Date de publication et mention de la délivrance du brevet: **09.06.2021**
(21) Numéro de dépôt: 13792852.9
(22) Date de dépôt: 17.10.2013
(51) Int. Cl.: A01K 61/60

(54) **INSTALLATION D'AQUACULTURE DE HAUTE MER**
OFFSHORE-AQUAKULTURANLAGE
OFFSHORE AQUACULTURE INSTALLATION

(30) Priorité: 17.10.2012 FR 1202781; 18.10.2012 FR 1202802
(43) Date de publication de la demande: 23.09.2015
(73) Titulaire: Menard, Serge, 09500 Saint Julien de Gras Capou (FR)
(72) Inventeur: Menard, Serge, 09500 Saint Julien de Gras Capou (FR)
(74) Mandataire: Mahler, Peter
(86) Numéro de dépôt international: PCT/EP2013/003129
(87) Numéro de publication internationale: WO 2014/060107

(56) Documents cités:
- WO-A1-2004/011328
- WO-A2-2009/085987
- FR-A1- 2 846 517
- GB-A- 1 450 575
- SU-A1- 654 224
- DATABASE WPI Week 197950 Thomson Scientific, London, GB; AN 1979-L6035B XP002719622, -& SU 654 224 A1 (MOSCOW LOMONOSOV UNIV) 30 mars 1979 (1979-03-30)

## Description

La présente invention concerne une installation d'aquaculture de haute mer.

L'élevage intensif de poissons en milieu fermé tend à se développer largement de nos jours. Pour cet usage, on a déjà réalisé de nombreuses cages grillagées où l'on peut mettre en quelque sorte les poissons à l'engrais, les tenir à l'abri des prédateurs, surveiller leur état sanitaire, puis les pêcher facilement lorsqu'ils ont atteint la taille voulue.

On connaît déjà des installations d'aquaculture placées dans des sites protégés tels que des atolls ou des fonds de fjords. Cependant, un inconvénient de ces installations est leur confinement car l'eau n'est renouvelée que partiellement et subit différents processus de pollution. Ainsi, les poissons provoquent une pollution locale du volume qui les contient, ainsi que celle de l'espace sous-marin situé sous l'installation, ce qui réduit également la quantité d'oxygène disponible du volume d'élevage. Cette situation favorise le développement des maladies si bien que la densité des poissons dans les cages doit être limitée. Cela oblige à utiliser une grande surface d'exploitation pour réaliser la production visée. Cependant, cette grande surface sera également polluée. De plus, ces installations peuvent être polluées par les rejets continentaux, comme par exemple des nitrates, des eaux usées des villes, etc.

Ces installations côtières ont également d'autres inconvénients. Elles polluent les zones côtières qui sont le lieu de reproduction privilégié des frayères de poissons sauvages, ce qui compromet l'avenir de la production de la pêche professionnelle, déjà en régression.

De plus, ces installations côtières entrent maintenant en concurrence avec le développement de la promotion immobilière, les sports nautiques, la plaisance, le tourisme et autres activités littorales.

On a essayé de remédier à ces inconvénients par l'aquaculture de pleine mer. Pour y parvenir, on a utilisé des cages flottantes ancrées au fond de la mer. Le fonctionnement de celles-ci est plus satisfaisant lorsqu'elles se trouvent dans des baies ou des anses protégées des tempêtes. Cependant, la pollution reste un problème récurrent, car l'absence de courants marins ne permet pas une dispersion suffisante des rejets issus des cages d'élevage, ce qui oblige également à des réductions de la densité de poissons dans les cages. De plus, ces cages de type artisanal ne peuvent pas résister aux conditions régnant en haute mer et subissent également les pollutions rejetées par le continent.

Plus récemment, des installations de haute mer ont vu le jour. Ces installations sont ballastées et submersibles et peuvent se soustraire aux tempêtés et aux dangers de surface, elles peuvent être disposées dans des zones traversées par des courants marins et comprendre plusieurs modules d'élevages espacés, et positionnés en travers des courants.

Le document WO 2004/011328 A1 décrit une unité mobile pour l'engraissement en haute mer et le transport de poissons. Si l'unité mobile est ancrée pour l'engraissement des poissons contenus dans les cages, les cages sont descendues de la base moyennant des treuils qui sont situés dans des colonnes de support. La structure flottante est située en haut de l'unité.

Les installations de haute mer ballastées et submersibles de l'état de la technique mentionnées plus haut sont maintenues en place par des lignes d'ancrage munies de dispositifs de réglage de tension des lignes pour s'adapter au marnage dû aux marées. La variation de la hauteur d'eau peut aller jusqu'à 12 mètres. Ces lignes d'ancrage sont reliées le plus souvent à des corps-morts qui doivent être soigneusement disposés, ce qui nécessite des études de télémétrie, et souvent des aménagements géotechniques très coûteux, car la stabilité de l'installation dépend de la précision de ces réglages, la forme indéfinie de ces installations ballastées ne permettant pas d'assurer à elle seule la stabilité indispensable de l'installation.

Lorsque les conditions de courants sont bien adaptées, c'est-à-dire lorsque les courants sont suffisamment forts pour permettre une bonne dispersion des rejets d'élevage et maintenir une bonne oxygénation du volume d'eau utilisé, ces installations peuvent donner satisfaction sur le plan de l'élevage.

Par contre, dans les mers où les courants ont une intensité moyenne à faible, la pollution redevient possible, avec les conséquences déjà citées.

Le document GB 1450575 A décrit un navire qui comporte un bassin avec un écran en filet à la proue et la poupe de sorte que l'eau peut circuler à travers le bassin si le navire se déplace relatif à l'eau. Le navire est équipé de moyens de propulsion, par exemple par une hélice. Il se sert de ses propres moyens de propulsion pour avancer et pour générer un échange d'eau.

Le but de la présente invention est de proposer une installation d'aquaculture de haute mer dans un environnement sain pour les poissons en ayant la plus petite empreinte possible sur l'environnement en terme de pollution, avec une combinaison de moyens techniques garantissant la stabilité de la structure et la sécurité des hommes, avec tous les équipements nécessaires permettant une exploitation aisée en haute mer.

Selon l'invention, ce but est atteint par une installation d'aquaculture de haute mer selon la revendication indépendante 1 comportant une ou plusieurs cages pour l'élevage de poissons et une structure flottante ballastée et submersible. L'installation est de forme allongée et comporte un dispositif d'ancrage principal présentant une ligne d'ancrage reliée d'un coté à la structure et permettant de l'autre côté l'ancrage sur un point unique d'ancrage dans l'environnement de l'installation. La structure comprend en outre au moins deux coques parallèles équipées de ballasts réglables, ces coques étant installées au bas de chacune des faces latérales de la structure. L'installation comprend une ou plusieurs cages longitudinales et rectangulaires disposées à l'intérieur de la structure, et la partie supérieure de l'installation constitue un pont de manutention permettant la circulation sur l'installation et donnant accès aux cages et à des équipements d'exploitation éventuellement prévus.

Le but de l'invention est en partie atteint en rendant l'installation mobile grâce à une ligne d'ancrage principal unique permettant d'effectuer un mouvement giratoire de grande ampleur, en multipliant au moins par 5, avantageusement par 10, et plus avantageusement par 20 ou plus, la surface d'exploitation de l'installation. La stabilité de la structure est assurée grâce aux coques situées au bas de chacune des faces latérales de la structure, moins sensibles aux mouvements de la mer en surface. Les quilles permettent une meilleure orientation de l'installation par rapport à un courant d'eau. Si la direction du courant d'eau change, l'installation peut se déplacer grâce à sa ligne d'ancrage unique, tout en gardant son orientation relative au courant. Cette disposition contribue également à la stabilité de l'installation. Ainsi, la direction du courant d'eau à l'intérieur de la structure est connue et on peut en optimiser l'efficacité par exemple par l'agencement des cages, des points de distribution de nourriture etc. Par exemple la perte de nourriture par des courants d'eau peut être fortement limitée en fournissant la nourriture en amont du courant.

Il est bien compris que la ligne d'ancrage principale permet l'orientation de l'installation selon les courants. Cependant, une ou plusieurs lignes d'ancrages secondaires peuvent être installées pour par exemple sécuriser l'installation en cas de défaillance de la ligne d'ancrage principale, sans qu'elles puissent contribuer sous des conditions normales, à modifier la fonction d'orientation de la ligne d'ancrage principale.

La structure est facilement accessible, même sous conditions météorologiques défavorables, si la partie supérieure de l'installation comprend une surface plane de travail, tel un pont de manutention et de circulation donnant accès aux cages et aux équipement d'exploitation prévus. Ce pont peut avoir une surface notamment d'au moins 500 m², avantageusement 1000 m² voire même 2000 m² ou plus. Elle peut faire jusqu'à 60 m de long ou plus. Cette configuration et ces dimensions permettent de réaliser une exploitation efficace, avec un minimum de risque pour le personnel. De plus, le pont de l'installation peut être surélevé au-dessus du niveau des vagues grâce aux ballasts de l'installation, ce qui permet de faire flotter l'installation à différents niveaux en fonction des besoin et de l'état de la mer.

Pour améliorer la stabilité de la structure, les coques de la structure peuvent être équipées de quilles fixes ou mobiles. La quille d'un bateau désigne la partie la plus basse du navire. Elle permet de maintenir ce dernier en équilibre et sert également de dérive. Le terme quille dans le contexte de ce document désigne la forme d'un corps hydrodynamique qui permet l'alignement de la structure par rapport à un courant d'eau. Ainsi, les coques elles-mêmes peuvent avoir des surfaces horizontales et/ou verticales aplaties leur apportant les avantages d'une quille en contribuant à réduire les mouvements de roulis ou de tangage.

L'équipement des coques par des quilles permet l'orientation plus rapide de l'installation lors des changements de courants et une meilleure stabilité si la mer est agitée.

Avantageusement, les coques peuvent être équipées de stabilisateurs de roulis.

La forme et l'arrangement des coques au bas de chacune des faces latérales de la structure est une application du concept du navire à deux coques SWATH (Small Waterplane Area Twin Hull). Un navire avec des coques SWATH est un navire à deux coques, chaque coque étant profondément immergée. La plateforme centrale est reliée aux coques par des jonctions minces au niveau de la flottaison. L'intérêt de cette configuration est d'améliorer la tenue à la mer par mauvais temps.

Selon les dimensions de l'installation il peut être souhaitable de positionner les coques encore plus profondément dans l'eau pour éviter les zones parfois très agitées près de la surface. Dans ce but, des éléments de jonction minces et essentiellement verticaux peuvent être prévus, qui relient les coques à l'installation. Les coques sont ainsi agencées au bas de la structure flottante et assurent de par leur position, leur forme et leur volume, une meilleure stabilité hydrostatique et hydrodynamique de l'installation, ce qui rend l'installation particulièrement stable et insensible aux effets déstabilisants des vagues.

Les avantages de l'invention permettent également l'implantation sur site sans réglages couteux et permettent de déplacer l'installation facilement, rapidement, et de manière très économique, ce qui permet de déplacer l'installation à la moindre alerte de pollution de la surface d'exploitation qu'elle occupe.

Un point d'ancrage d'une telle installation peut par exemple être un corps mort ballasté ayant un dispositif de fixation pour la ligne d'ancrage de l'installation. Cela peut aussi être un dispositif d'ancrage quelconque tel un ancre à succion, une tige ou colonne enfouie, ou tout autre dispositif remplissant à la fois la fonction d'ancrage permettant une rotation circulaire. L'ancrage sur un point unique d'ancrage présente plusieurs avantages. En premier lieu l'installation peut effectuer une rotation complète sur 360° sur le plan horizontal, par exemple grâce à un support rotatif reliant la ligne d'ancrage au corps mort, afin d'éviter de torsader la ligne d'ancrage, ce qui pourrait avoir pour effet de la fragiliser. La position de l'installation s'ajuste en fonction de la direction des courants marins dominants. Les rejets éventuels de l'installation sont donc facilement dispersés.

De plus, ce corps mort unique et ballasté permet d'installer et de déménager l'ensemble de l'installation en un temps assez court, ce qui peut permettre également de pratiquer des changements d'emplacements en cas d'insuffisance de courants ou à la moindre alerte d'auto pollution, pour garantir une préservation totale de la qualité de l'environnement marin et une oxygénation maximale du volume d'élevage.

La longueur de la ligne d'ancrage est calculée pour établir une distance entre l'aplomb du point d'ancrage et le point de liaison de la ligne d'ancrage à l'installation d'au moins 25 m, avantageusement 50 m, ou 80 m et plus. Ces caractéristiques permettent à l'installation d'éparpiller ses éventuels rejets le long d'un périmètre circulaire conséquent, de longueur proportionnelle à son rayon, le positionnement permanent de l'axe longitudinal de l'installation dans l'axe du courant dominant apportant une meilleure stabilité et également des avantages notables facilitant l'exploitation.

Avantageusement, la ligne d'ancrage est un bras rigide ou semi-rigide. La connexion entre la ligne d'ancrage et la structure et entre la ligne d'ancrage et le point d'ancrage peut être une connexion articulée dans le plan horizontal, de manière à compenser le tangage éventuel de l'installation et les différentes hauteurs d'eau dues aux marées. Si le bras est un bras rigide, l'installation peut se déplacer le long du pourtour d'un cercle défini par la longueur du bras qui représente son rayon. Le bras peut également être semi-rigide pour permettre un déplacement libre de l'installation autour du pourtour d'un cercle sans que l'installation puisse traverser l'intérieur du cercle.

Dans un autre mode de réalisation, la ligne d'ancrage est constituée de plusieurs lignes d'ancrage ou de bras triangulés positionnés de telle manière que les extrémités reliées à l'installation peuvent être espacées sur toute ou une partie seulement de la largeur de l'installation, alors que les extrémités opposées se rejoignent à un bras central assez près du point central d'ancrage, ou sur le point central d'ancrage lui-même. Ces bras triangulés peuvent être renforcés par des renforts les reliant.

Si le bras est rigide et non-articulé l'installation se trouve toujours dans une position essentiellement radiale au cercle défini par le bras. Le bras peut de préférence être articulé en direction verticale près de ses points d'ancrage ou au niveau de ses points d'ancrage pour permettre l'adaptation à l'état de la mer et l'état des courants. Le bras peut aussi être télescopique pour permettre de maintenir une longueur de rayon d'ancrage constante mais réglable, quelque soit l'état de la mer et des courants.

Les éléments mentionnés ci-dessus et le fait que la partie supérieure de l'installation peut se trouver en condition normale d'exploitation à 2 ou 3 mètres ou plus au-dessus du niveau de la mer, facilitent l'exploitation de l'installation, notamment des conditions d'accostage et d'accès constantes et plus sécurisantes. Les postes et l'équipement de manutention peuvent être groupés, par exemple à l'arrière de l'installation, au côté opposé à celui recevant la ligne d'ancrage. Ce regroupement des fonctions spécifiques d'exploitation limitent les déplacements du personnel sur une installation de grande taille qui peut mesurer 60 m et plus.

L'installation est de forme allongée et constituée de cages longitudinales et parallèles sur toute sa longueur. Cette disposition permet aux poissons d'effectuer leurs plus longs déplacements face au courant, ce qui les rapproche de la vie naturelle et garantit une meilleure qualité de chair.

De plus, les cages peuvent être équipées de surfaces grillagées en alliage de cuivre, cet alliage apportant de grands avantages d'exploitation, comme par exemple la protection contre les pollutions extérieures, les maladies et les salissures, une meilleure croissance des poissons, etc.

Les cages peuvent être équipées de cloisons mobiles grillagées ou équipées de filets permettant de réduire le volume d'élevage dans le sens longitudinal, transversal et/ou vertical. Cette réduction peut aller jusqu'à un volume réduit à 2 m³. Ces réductions de volumes permettent d'effectuer les opérations de triage et de récupération des poissons jusqu'au dernier poisson avec facilité.

L'installation peut être équipée d'un module de commande et/ou de surveillance autonome, habitable ou non habitable, qui peut être totalement étanche et submersible, intégré à l'installation ou amovible, situé sur la partie supérieure de l'installation ou constituant un module indépendant, flottant et ballasté, submersible ou semi-submersible. Ce module de commande peut aussi être un navire aménagé en conséquence.

L'installation selon l'invention peut également comprendre en plus des grillages ou filets normaux des cages, des dispositifs de déploiement de filets à mailles, de treillis, de filets à plancton ou parois textiles soit sur toutes ou une partie des faces verticales et horizontales de ses cages, soit sur toutes ou une partie des faces extérieures de l'installation, permettant de les occulter totalement ou en partie seulement. Chaque dispositif peut être actionné au moyen de treuils manuels, d'enrouleurs, de câbles, de bras articulés ou télescopiques, manuellement ou de manière automatisée, permettant d'intervenir facilement sur les filets, treillis, filets à plancton ou parois textiles, permettant notamment d'éviter les pertes d'aliments, de récupérer les déjections, ou d'assurer une protection contre les organismes extérieurs, telles que les méduses par exemple. La taille des mailles doit être choisie en fonction du but, par exemple plus petite pour la récupération des déjections et plus grande pour la protection contre des méduses.

L'installation peut en outre être équipée d'un mât comprenant notamment des équipements radio, radar, vidéo et/ou de radio-commande. Le mât peut être fixe ou télescopique et/ou escamotable, afin de faciliter la maintenance des équipements portés par le mât et le transport ou le déplacement de l'installation grâce à la réduction possible de la hauteur du mât lorsqu'il est télescopique ou escamotable. La hauteur d'un tel mât peut être d'au moins 20 m, avantageusement 30 m ou plus. Ce mât qui peut être télescopique et/ou escamotable, permet de ramener la tête de mât portant les équipements au niveau du « pont » de l'installation, et aux hommes d'intervenir sur les équipements sans avoir à monter au mât. La tête de mât portant les équipements peut également comprendre un support des équipements, pouvant coulisser le long d'un mât rigide. Le mât peut aussi comprendre une nacelle permettant d'accéder au sommet en toute sécurité.

Pour être autonome, l'installation peut avantageusement être équipée d'hydroliennes et/ou de panneaux photovoltaïques, rigides, semi-rigides ou souples, ces derniers pouvant notamment être actionnés par des dispositifs de déploiement par enrouleurs. En outre, l'installation peut être équipée d'éoliennes escamotables, ou installées sur le mât de l'installation, notamment.

L'installation peut être équipée de dérives creuses et étanches en totalité ou en partie seulement, qui peuvent être lestées et/ou ballastées, et situées de préférence à l'arrière, sur la partie extérieure de ses faces longitudinales. Elles peuvent également être installées sur le pont de l'installation, dans ce cas, elles n'exercent la fonction de dérive que par rapport aux vents ou lorsque l'installation est immergée. Ces dérives peuvent contenir différents équipements de commande ou/et de surveillance, des stockages d'énergie, d'air comprimé ou d'aliments par exemple, en plus de leur fonction dynamique, et comprendre des moyens d'accès et une avancée constituant un abri protégeant des vagues. Ces dérives peuvent également comprendre des aménagements d'habitation. Les dérives peuvent notamment contenir des conteneurs d'aliments à volumes variables. Elles peuvent comprendre des ballasts permettant de compenser les différences de poids d'aliment présents dans ces conteneurs.

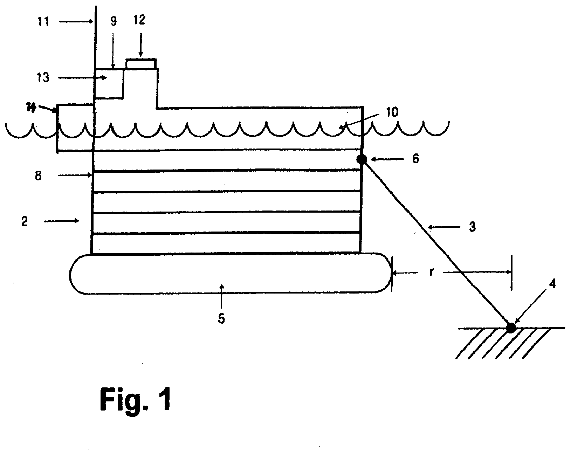

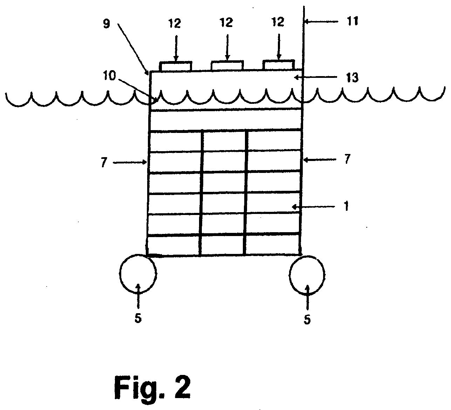

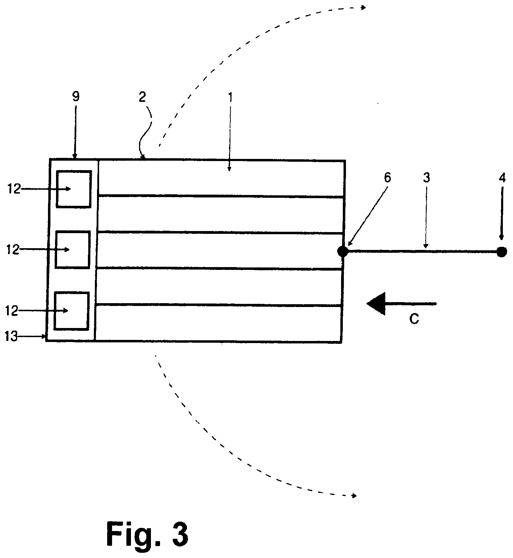

L'invention est expliquée plus précisément ci-après à l'aide des figures ci-jointes qui montrent un mode de réalisation de l'invention de manière schématique :
**La** **figure 1** illustre une installation d'aquaculture selon l'invention en vue latérale ;
**La** **figure 2** illustre l'installation d'aquaculture selon la figure 1 en vue de derrière ;
**La** **figure 3** illustre l'installation d'aquaculture selon les figures 1 et 2 en vue de dessus.

La **figure 1** illustre un mode de réalisation d'une installation d'aquaculture selon l'invention en vue latérale. Il est précisé que cette figure, ainsi que les autres figures, montrent l'installation de manière purement schématique pour expliquer le mode de fonctionnement général de l'invention. Les figures ne sont ni à l'échelle ni complètes mais montrent de manière schématique uniquement les éléments qui sont nécessaires pour apprécier l'invention.

L'installation comporte plusieurs cages rectangulaires **1** pour l'élevage de poissons et une structure flottante ballastée et submersible **2.** L'installation est globalement de forme rectangulaire. Elle comprend deux coques parallèles **5** installées au bas de chacune des faces latérales **7** et présentant des quilles. La partie supérieure de l'installation présente en grande partie une surface plane.

L'installation comprend en outre un dispositif d'ancrage présentant un bras d'ancrage **3** rigide. Le bras est relié d'un coté **6** à la structure **2** de l'installation et est ancré de l'autre coté sur un point unique d'ancrage **4** dans l'environnement de l'installation, en l'occurrence sur un corps mort ballasté et installé sur le fond de la mer.

Les raccords du bras **3** des deux cotés **4, 6** sont des raccords articulés autour d'axes horizontaux pour pouvoir compenser les effets du marnage. L'ancrage au point unique d'ancrage **4** sur le corps mort permet une rotation de l'installation sur 360° dans le plan horizontal. Le bras **3** peut être télescopique pour maintenir le rayon de rotation **r** constant indépendamment des marées.

Les coques **5** comportent des ballasts réglables pour pouvoir régler le niveau de flottaison **10** de l'installation ou provoquer son immersion à la profondeur choisie.

La partie supérieure de l'installation se trouve 2 à 3 mètres au-dessus du niveau de la mer en condition normale d'exploitation. Les conditions d'accostage et d'accès sont ainsi plus sécurisantes. Les postes et l'équipement de manutention **9** sont regroupés à l'arrière **8** de l'installation, au côté opposé à celui recevant le bras d'ancrage **3.** L'installation comporte ainsi un mât **11** escamotable pour transmettre des signaux radioélectriques, des panneaux photovoltaïques **12** pour rendre l'installation autonome ou encore des aménagements d'habitation **13** pour le personnel de maintenance. À l'arrière de l'installation sont également installées sur la partie extérieure de ses faces longitudinales des dérives 14.

La **figure 2** montre l'installation selon la figure 1 en vue de derrière. On voit les deux coques **5** au bas des faces latérales **7** de la structure 2. Les coques **5** présentent des quilles. La position des coques **5** en bas de la structure est une application du concept SWATH qui rend l'installation stable et insensible aux effets déstabilisants des vagues.

La **figure 3** est une vue de dessus de l'installation selon les figures 1 et 2. L'installation est de forme rectangulaire avec une surface de base rectangulaire allongée de 60 m de long. Le bras d'ancrage **3** relie l'installation à un point d'ancrage unique **4** sur un corps mort ballasté au fond de la mer et permet à l'installation une rotation sur 360°. La longueur du bras rigide **3** est choisie telle que le rayon de rotation de l'installation est de l'ordre de grandeur de 80 m.

La connexion **6** du bras **3** à la structure **2** est articulée pour permettre une rotation de l'installation par rapport au bras **3** autour d'un axe horizontal pour compenser les effets du marnage. Cependant, la connexion **6** est sinon rigide tel que la structure **2** ne peut pas tourner par rapport au bras **3** mais uniquement autour du point unique d'ancrage **4.** Un changement du courant de la mer à l'emplacement de l'installation entraîne ainsi un déplacement de l'installation par rotation autour du point d'ancrage **4.** La surface d'exploitation de l'installation est de cette manière multipliée et les éventuels rejets de l'installation dispersés.

Les cages **1** à l'intérieur de la structure sont disposées dans la direction longitudinale sur toute la longueur de l'installation. Les quilles permettent l'orientation automatique de l'installation dans le sens des courants. L'orientation de l'installation définie par rapport aux courants a plusieurs avantages. Elle permet par exemple aux poissons d'effectuer leurs plus longs déplacements dans des cages longitudinales face au courant **C,** ce qui les rapproche de la vie naturelle et garantit une meilleure qualité de chair. En plus, les endroits de fourniture de nourriture peut être choisie en amont du courant pour limiter des pertes.

## Revendications

1. Installation d'aquaculture de haute mer comportant une ou plusieurs cages (1) pour l'élevage de poissons et une structure (2) flottante ballastée et submersible, l'installation étant de forme allongée, l'installation comportant un dispositif d'ancrage principal présentant une ligne d'ancrage (3) reliée d'un coté (6) à la structure (2) et permettant de l'autre coté d'être ancrée sur un point unique d'ancrage (4) dans l'environnement de l'installation, la ou les cages (1) disposées à l'intérieur de la structure (2) étant rectangulaires et longitudinales sur toute la longueur de l'installation, et la partie supérieure de l'installation constituant un pont de manutention donnant accès aux cages,
l'installation étant **caractérisée en ce que** la structure comprend au moins deux coques parallèles (5) contenant des ballasts réglables, ces coques (5) étant installées au bas de chacune des faces latérales (7) de la structure (2).

2. Installation d'aquaculture selon la revendication 1, **caractérisée en ce que** les coques (5) sont équipées de quilles fixes ou mobiles.

3. Installation d'aquaculture de haute mer selon la revendication 1 ou 2, **caractérisée en ce que** la ligne d'ancrage est constituée d'un bras (3) rigide ou semi-rigide et/ou télescopique.

4. Installation d'aquaculture de haute mer selon l'une quelconque des revendications 1 à 3, **caractérisée en ce que** la ligne d'ancrage est un bras rigide ou semi-rigide composé de plusieurs bras triangulés.

5. Installation d'aquaculture de haute mer selon l'une quelconque des revendications 1 à 4, **caractérisée en ce que** la connexion entre la ligne d'ancrage et la structure et entre la ligne d'ancrage et le point d'ancrage est une connexion articulée dans le plan horizontal.

6. Installation d'aquaculture selon l'une quelconque des revendications 1 à 5, **caractérisée en ce que** le dispositif d'ancrage (3) permet une rotation de l'installation sur 360°.

7. Installation d'aquaculture selon l'une quelconque des revendications 1 à 6, **caractérisée en ce que** les cages (1) sont équipées de cloisons mobiles.

8. Installation d'aquaculture selon l'une quelconque des revendications 1 à 7, **caractérisée en ce qu'**elle comprend des dispositifs de déploiement de filets à mailles sur toutes ou une partie des faces verticales et horizontales de ses cages et/ou sur toutes ou une partie des faces extérieures de l'installation.

9. Installation d'aquaculture selon l'une quelconque des revendications 1 à 8, **caractérisée en ce qu'**elle comprend des dérives (14) creuses et étanches situées sur un côté (8) opposé à celui recevant la ligne d'ancrage, à l'extérieur des faces longitudinales de l'installation.

10. Installation d'aquaculture selon la revendication 9, **caractérisée en ce que** les dérives (14) creuses sont situées sur le pont de l'installation.

11. Installation d'aquaculture selon la revendication 10, **caractérisée en ce que** les dérives comportent des ballasts réglables.

12. Installation d'aquaculture selon l'une quelconque des revendications 1 à 11. **caractérisée en ce qu'**elle est équipée d'un module de commande et/ou de surveillance étanche et submersible, intégré à l'installation ou amovible ou constituant un module indépendant, flottant et ballasté, submersible ou semi-submersible.

13. Installation d'aquaculture selon l'une quelconque des revendications 1 à 12, **caractérisée en ce qu'**elle est équipée d'un mât (11) comprenant notamment des équipements radio, radar, vidéo et/ou de radio-commande et **en ce que** ce mât est fixe ou télescopique, et/ou escamotable, notamment intégré à l'installation ou au module de commande.

14. Installation d'aquaculture selon l'une quelconque des revendications 1 à 13, **caractérisée en ce qu'**elle est équipée d'hydroliennes et/ou de panneaux photovoltaïques (12) rigides, semi-rigides ou souples, notamment actionnés par des dispositifs de déploiement par enrouleurs.

## Patentansprüche

1. Offshore-Aquakulturanlage, die einen oder mehrere Käfige (1) für die Aufzucht von Fischen und eine schwimmende, mit Ballast versehene und tauchfähige Struktur (2) umfasst, wobei die Anlage eine längliche Form aufweist, und wobei die Anlage eine Hauptankervorrichtung umfasst, die eine Ankerleine (3) aufweist, die auf einer Seite (6) mit der Struktur (2) verbunden ist und auf der anderen Seite an einem einzelnen Ankerpunkt (4) in der Umgebung der Anlage verankert werden kann, und wobei der oder die Käfige (1), die im Inneren der Struktur (2) angeordnet sind, rechteckig und länglich sind und sich über die gesamte Länge der Anlage erstrecken, und wobei der obere Teil der Anlage ein Arbeitsdeck bildet, das den Zugang zu den Käfigen ermöglicht, **dadurch gekennzeichnet, dass** die Struktur mindestens zwei parallele Rümpfe (5) umfasst, die einstellbare Ballasttanks enthalten, wobei diese Rümpfe (5) am unteren Ende an jeder der Seitenflächen (7) der Struktur (2) installiert sind.

2. Aquakulturanlage nach Anspruch 1, **dadurch gekennzeichnet, dass** die Rümpfe (5) mit festen oder beweglichen Kielen ausgestattet sind.

3. Offshore-Aquakulturanlage nach Anspruch 1 oder 2, **dadurch gekennzeichnet, dass** die Ankerleine aus einem starren oder halbstarren und/oder teleskopischen Arm (3) besteht.

4. Offshore-Aquakulturanlage nach einem der Ansprüche 1 bis 3, **dadurch gekennzeichnet, dass** die Ankerleine ein starrer oder halbstarrer Arm ist, der aus mehreren triangulierten Armen besteht.

5. Offshore-Aquakulturanlage nach einem der Ansprüche 1 bis 4, **dadurch gekennzeichnet, dass** die Verbindung zwischen der Ankerleine und der Struktur und zwischen der Ankerleine und dem Ankerpunkt eine Scharnierverbindung in der horizontalen Ebene ist.

6. Aquakulturanlage nach einem der Ansprüche 1 bis 5, **dadurch gekennzeichnet, dass** die Ankervorrichtung (3) eine Drehung der Anlage um 360° erlaubt.

7. Aquakulturanlage nach einem der Ansprüche 1 bis 6, **dadurch gekennzeichnet, dass** die Käfige (1) mit beweglichen Trennwänden ausgestattet sind.

8. Aquakulturanlage nach einem der Ansprüche 1 bis 7, **dadurch gekennzeichnet, dass** sie Vorrichtungen zum Ausbringen von Maschennetzen auf allen oder einem Teil der vertikalen und horizontalen Flächen ihrer Käfige und/oder auf allen oder einem Teil der Außenflächen der Anlage umfasst.

9. Aquakulturanlage nach einem der Ansprüche 1 bis 8, **dadurch gekennzeichnet, dass** sie hohle und wasserdichte Erweiterungen (14) aufweist, die auf einer gegenüber der Ankerleine liegenden Seite (8) außerhalb der Längsseiten der Anlage angeordnet sind.

10. Aquakulturanlage nach Anspruch 9, **dadurch gekennzeichnet, dass** die hohlen Erweiterungen (14) auf dem Deck der Anlage angeordnet sind.

11. Aquakulturanlage nach Anspruch 10, **dadurch gekennzeichnet, dass** die Erweiterungen regelbare Ballasttanks aufweisen.

12. Aquakulturanlage nach einem der Ansprüche 1 bis 11, **dadurch gekennzeichnet, dass** sie mit einem wasserdichten und tauchfähigen Steuer- und/oder Überwachungsmodul ausgestattet ist, das in die Anlage integriert oder abnehmbar ist oder ein unabhängiges, schwimmendes und mit Ballast versehenes, tauchfähiges oder halbtauchfähiges Modul bildet.

13. Aquakulturanlage nach einem der Ansprüche 1 bis 12, **dadurch gekennzeichnet, dass** sie mit einem Mast (11) ausgestattet ist, der insbesondere eine Funk-, Radar-, Video- und/oder Funksteuerungseinrichtung umfasst, und dass dieser Mast fest oder teleskopisch und/oder versenkbar und insbesondere in die Anlage oder in das Steuermodul integriert ist.

14. Aquakulturanlage nach einem der Ansprüche 1 bis 13, **dadurch gekennzeichnet, dass** sie mit Wasserturbinen und/oder starren, halbstarren oder flexiblen photovoltaischen Paneelen (12) ausgestattet ist, die insbesondere durch Entfaltungsvorrichtungen mit Wickelvorrichtungen betätigt werden.

## Claims

1. Offshore aquaculture installation comprising one or several cage(s) (1) for breeding of fish and a floating, ballasted and submersible structure (2), wherein the installation is elongated in shape and comprises a main anchoring device with an anchoring line (3) connected on one side (6) to the structure (2) and enabling on the other side to be anchored on a single anchoring point (4) in the environment of the installation, and wherein the one or several cage(s) (1) arranged in the interior of the structure (2) are rectangular and longitudinal along the entire length of the installation and wherein the upper portion of the installation forms a handling bridge securing access to the cages, **characterized in that** the structure comprises at least two parallel hulls (5) containing adjustable ballasts, whereas these hulls (5) are installed at the bottom of each of the side faces (7) of the structure (2).

2. Aquaculture installation according to claim 1, **characterized in that** the hulls (5) are equipped with fixed or mobile keels.

3. Offshore aquaculture installation according to claim 1 or 2, **characterized in that** the anchoring line consists of a rigid or semi-rigid and/or telescopic arm (3).

4. Offshore aquaculture installation according to any one of claims 1 to 3, **characterized in that** the anchoring line is a rigid or semi-rigid arm composed of several triangulated arms.

5. Offshore aquaculture installation according to any one of claims 1 to 4, **characterized in that** the connection between the anchoring line and the structure and between the anchoring line and the anchoring point is a hinged connection on the horizontal plane.

6. Aquaculture installation according to any one of claims 1 to 5, **characterized in that** the anchoring device (3) enables a 360° rotation of the installation.

7. Aquaculture installation according to any one of claims 1 to 6, **characterized in that** the cages (1) are equipped with mobile partitions.

8. Aquaculture installation according to any one of claims 1 to 7, **characterized in that** it comprises devices for deploying mesh nets over all or a portion of the vertical and horizontal faces of its cages and/or over all or a portion of the external faces of the installation.

9. Aquaculture installation according to any one of claims 1 to 8, **characterized in that** it comprises hollow and waterproof skegs (14) situated at a face (8) of the installation at the side opposite the anchoring means, outside the longitudinal faces of the installation.

10. Aquaculture installation according to claim 9, **characterized in that** the hollow skegs (14) are situated on the bridge of the plant.

11. Aquaculture installation according to claim 10, **characterized in that** the skegs comprise adjustable ballasts.

12. Aquaculture installation according to any one of claims 1 to 11, **characterized in that** it is equipped with a waterproof and submersible control and/or surveillance module, integrated to the plant or removable or forming an independent, floating and ballasted, submersible or semi-submersible module.

13. Aquaculture installation according to any one of claims 1 to 12, **characterized in that** it is equipped with a mast (11) comprising in particular radio, radar, video and/or radio control equipment and **in that** said mast is fixed or telescopic and/or retractable, in particular integrated to the installation or to the control module.

14. Aquaculture installation according to any one of claims 1 to 13, **characterized in that** it is equipped with water turbines and/or rigid, semi-rigid or flexible photovoltaic panels, in particular actuated by reel-operated deploying devices.
